# EUROPEAN PATENT SPECIFICATION

(11) **EP 3 524 794 B1**
(45) Date of publication and mention of the grant of the patent: **20.01.2021**
(21) Application number: 18155446.0
(22) Date of filing: 07.02.2018
(51) Int. Cl.: F02B 75/04, F16C 3/06, F16C 9/02

(54) **A RECIPROCATING PISTON MECHANISM**
HUBKOLBENMECHANISMUS
MÉCANISME DE PISTON ALTERNATIF

(43) Date of publication of application: 14.08.2019
(73) Proprietor: Gomecsys B.V., 1411 AR Naarden (NL)
(72) Inventor: De Gooijer, Lambertus Hendrik, 1401 EP Bussum (NL)
(74) Representative: De Vries & Metman

(56) References cited:
- EP-A1- 2 907 986
- WO-A1-2015/155233
- WO-A1-2017/211728
- US-A- 3 686 972
- US-A- 4 152 955

## Description

The present invention relates to a reciprocating piston mechanism comprising a crankcase, a crankshaft having a crankshaft axis, a crankpin, a crank arm and a crankshaft portion extending parallel to the crankpin, wherein the crank arm is located between the crankshaft portion and the crankpin as seen along the crankshaft axis, wherein the crankshaft is supported by the crankcase and rotatable with respect thereto about the crankshaft axis, a connecting rod including a big end and a small end, a piston being rotatably connected to the small end, a crank member being rotatably mounted on the crankpin, and comprising a bearing portion having an outer circumferential wall which bears the big end of the connecting rod such that the connecting rod is rotatably mounted on the bearing portion of the crank member via the big end, wherein the crank member is driveably coupled to a drive wheel for driving the crank member in rotational direction with respect to the crankpin, which drive wheel is disposed at the same side of the crank arm as the crank member and fixed to a drive shaft that is rotatably mounted to the crankshaft and that extends in the same direction as the crankshaft axis through a through-hole in the crank arm.

WO 2015/155233 discloses an internal combustion engine including such a reciprocating piston mechanism. The known reciprocating piston mechanism provides the opportunity to operate the engine at varying compression ratios. Upon assembly of the crankshaft of the known mechanism the drive shaft is inserted into the crankshaft after which the drive wheel is pressed onto the drive shaft for fixing the drive wheel and the drive shaft to each other.

The present invention aims to provide a reciprocating piston mechanism which simplifies the process of assembling the mechanism.

For this purpose the through-hole has a larger diameter than an external diameter of the drive wheel.

This provides the opportunity to fix the drive wheel and the drive shaft to each other separate from the crankshaft, after which the drive shaft including the drive wheel can be inserted into the crankshaft and moved through the through-hole towards the side of the crank arm where the crank member is located. This avoids the necessity of fixing the drive wheel to the drive shaft at the side of the crank arm where the crankpin is located and where operating space is usually limited.

At the side of the crank arm opposite to the side where the crankpin is located the drive shaft may be drivably coupled to a driving device, for example to the crankshaft via a transmission. It is noted that the drive wheel and the crank member may be drivably coupled to each other through a transmission which requires that the drive shaft and the drive wheel have a fixed position with respect to the crankcase.

The bearing portion of the crank member may be eccentrically disposed with respect to the crankpin in order to apply the mechanism in an internal combustion engine for varying the compression ratio.

In a particular embodiment the crankshaft portion has a centreline which coincides with the crankshaft axis, wherein the through-hole also extends through the crankshaft portion and wherein the drive shaft extends through the crankshaft portion and the crank arm.

The drive shaft may be rotatable about a drive shaft axis which coincides with the crankshaft axis. This means that the crankshaft portion of the crankshaft and the drive shaft are concentrical.

In a practical embodiment the drive shaft is rotatably mounted in a shaft housing which is fixed inside said through-hole. Before fixing the shaft housing into the crankshaft it can be prepared by mounting the drive shaft and the drive wheel to the shaft housing.

In a preferred embodiment the shaft housing protrudes from the crankshaft at the crankshaft portion at a side of the crank arm opposite to the side where the crankpin is located, since this provides the opportunity to pre-assemble parts to the protruding portion of the shaft housing before fixing the shaft housing as an assembled unit to the crankshaft.

For example, a driving element, such as a pulley, a sprocket wheel or the like can be fixed on the protruding portion of the shaft housing.

In practice, the shaft housing may be screwed inside the through-hole.

The drive shaft may protrude from the shaft housing at a side of the crank arm opposite to the side where the crankpin is located, for example in order to a mount a pulley to the drive shaft.

In a specific embodiment the crank member is provided with an external crank member gear and the drive wheel is formed by an external drive gear which meshes with the crank member gear.

Alternatively, the crank member may be provided with an external crank member gear wherein the drive wheel is formed by an external drive gear, which gears mesh with an intermediate gear that is rotatably mounted to the crankshaft.

In a particular embodiment, when the crank member is provided with an external crank member gear and the drive wheel is formed by an external drive gear which meshes with the crank member gear, the drive shaft is provided with a transfer gear which meshes with a reverse gear that is rotatably mounted to the shaft housing, which reverse gear meshes with a rear intermediate gear that is fixed to a front intermediate gear and rotatably mounted to the shaft housing, wherein the front intermediate gear meshes with a control gear that is fixed on a control shaft, wherein the reverse gear meshes with the transfer gear and the rear intermediate gear in a rear plane and the control gear and the front intermediate gear mesh with each other in a front plane which extends parallel to the rear plane, wherein the control shaft is rotatable with respect to the shaft housing about the crankshaft axis, wherein the control gear, the front and rear intermediate gears, the reverse gear and the transfer gear are accommodated in a widened portion of the protruding portion of the shaft housing, wherein the pulley is fixed to the widened portion and the control shaft projects from the widened portion through a through-hole in the centre of the pulley. An advantage of this embodiment is that the widened portion including the mentioned gears is located between the pulley and the crankshaft, which facilitates designing an oil circuit between the gears and the crankshaft.

The pulley may have a cavity at the side of the shaft housing, in which the widened portion is at least partially accommodated. This means that a part of the pulley surrounds at least a part of the widened portion which provides the opportunity of keeping the mechanism compact in longitudinal direction of the crankshaft axis.

The front and rear intermediate gears may form a common intermediate gear.

The invention will hereafter be elucidated with reference to schematic drawings showing embodiments of the invention by way of example.
Fig. 1 is a perspective sectional view of a part of an internal combustion engine comprising an embodiment of a reciprocating piston mechanism according to the invention.
Fig. 2 is a similar view as Fig. 1, but showing a part of the embodiment on a larger scale.
Fig. 3 is a perspective view of a part of the embodiment as shown in Fig. 1 on a larger scale.
Fig. 4 is an exploded view of a part of Fig. 2.
Fig. 5 is a perspective exploded sectional view of a part of an alternative embodiment of the reciprocating piston mechanism according to the invention.
Fig. 6 is a similar view as Fig. 5. showing the embodiment in assembled condition.
Fig. 7 is a perspective view of the embodiment of Fig. 5, in which parts are left out for explanatory reasons.
Fig. 8 is a similar view as Fig. 7, in which the left-out parts of Fig. 7 are also shown.

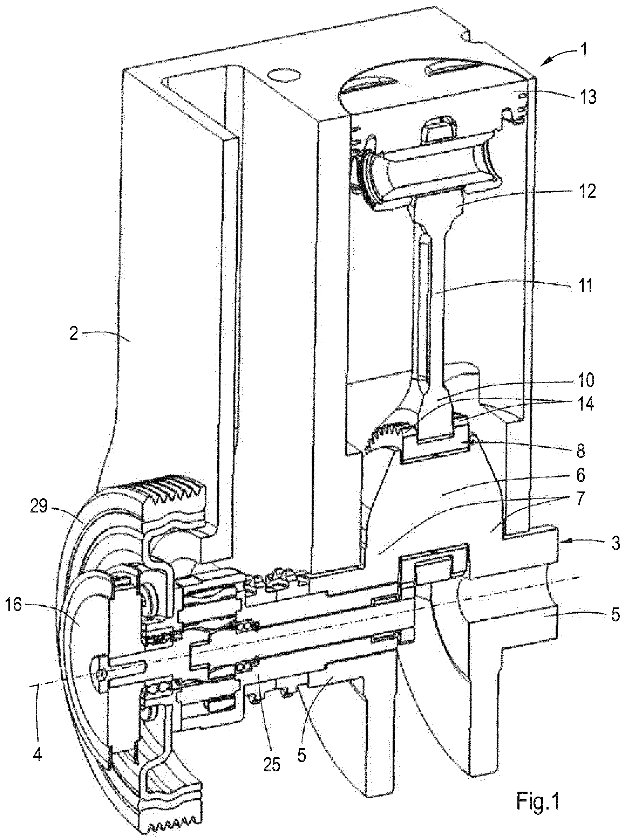

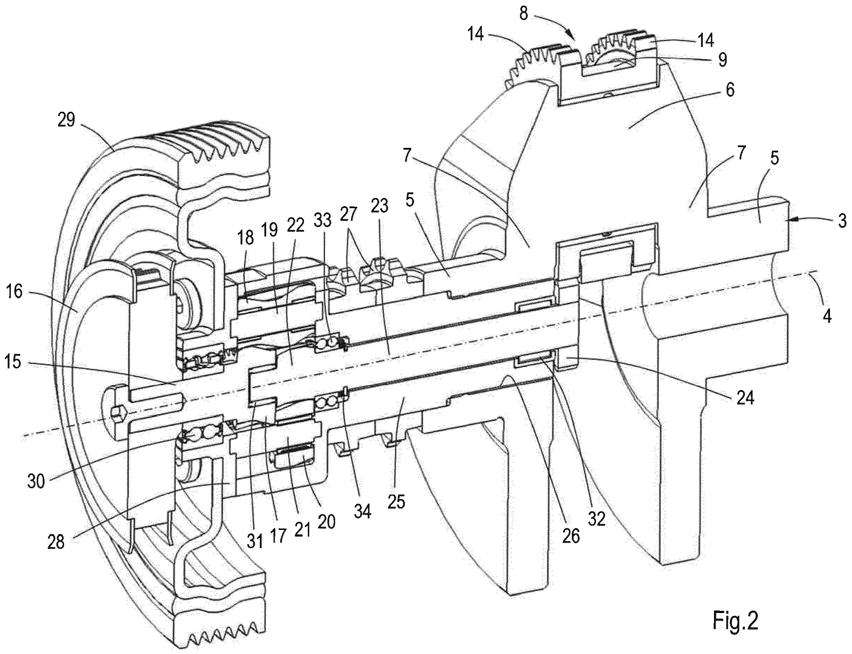

Fig. 1 shows a part of an internal combustion engine 1 which is provided with a reciprocating piston mechanism according to the invention. Figs. 2-4 show details of the front part of the engine 1. The engine 1 is a four-stroke engine and has a variable compression ratio which provides the opportunity to operate the engine 1 at high compression ratio under part-load conditions resulting in improved efficiency. Under high-load conditions the compression ratio can be lowered in order to avoid knocking. The reciprocating piston mechanism of the engine 1 comprises a crankcase 2, which supports a crankshaft 3 by crankshaft bearings. The crankshaft 3 has a crankshaft axis 4 and is rotatable with respect to the crankcase 2 about the crankshaft axis 4.

The crankshaft 3 comprises crankshaft portions in the form of central main portions 5, of which two are visible in Fig. 1. The central main portions 5 in Fig. 1 are located at crankshaft bearings in this case. The crankshaft 3 further comprises crankpins 6, of which one is visible in Fig. 1, and crank arms 7, of which two are visible in Fig. 1. Each crank arm 7 is located between one central main portion 5 and one crankpin 6 as seen along the crankshaft axis 4. It is noted that in Fig. 1 the left side is a front side of the engine 1. At the opposite rear side of the engine 1 a flywheel (not shown) is fixed to the crankshaft 3. Although Fig. 1 shows a single cylinder the engine 1 may be a multi-cylinder engine.

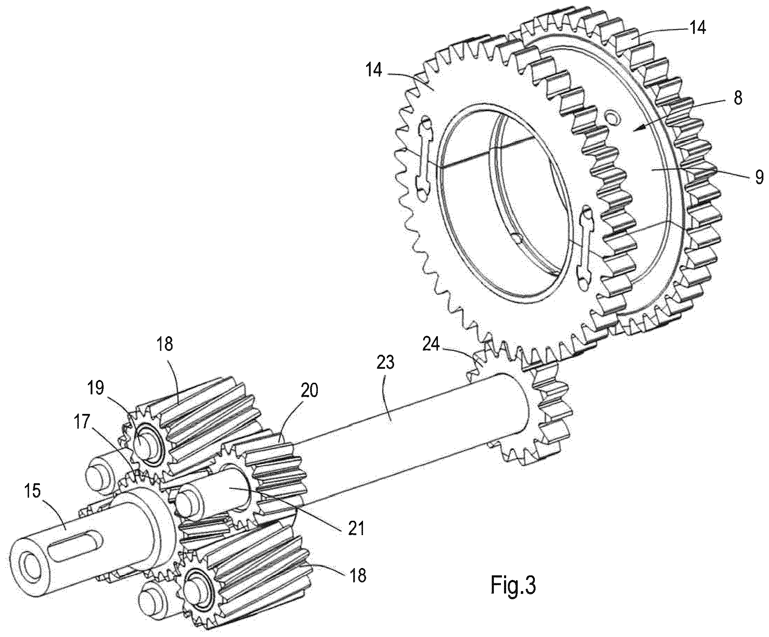

The engine 1 comprises a crank member 8 which is rotatably mounted on the crankpin 6. The crank member 8 is provided with a bearing portion 9 which is disposed eccentrically with respect to the crankpin 6, see Figs. 2 and 3. The bearing portion 9 has an outer circumferential wall which bears a big end 10 of a connecting rod 11. Thus, the connecting rod 11 is rotatably mounted on the crank member 8 via its big end 10. The connecting rod 11 also includes a small end 12 to which a piston 13 is rotatably connected.

The crank member 8 is provided with two external crank member gears 14 at both sides of the bearing portion 9. The crank member gear 14 located closest to the front side of the engine 1 is drivably coupled to a control shaft 15 for varying the rotational position of the crank member 8 at virtual standstill of the crankshaft 3 under operating conditions. This means that the crank member 8 can have different rotational positions with respect to the crankpin 6 when the piston 13 is in TDC. The control shaft 15 is rotatable with respect to the crankcase 2 about the crankshaft axis 4. The control shaft 15 has a fixed rotational position with respect to the crankcase 2 under operating conditions at fixed compression ratio. The control shaft 15 can be turned by means of a pulley 16 as shown in Fig. 2, but numerous alternative driving means are conceivable. The other crank member gear 14 of the crank member 8 is drivably coupled to a next crank member at a next crankpin (which are not shown in the drawings), in order to force all crank members of the engine 1 to be operated similarly.

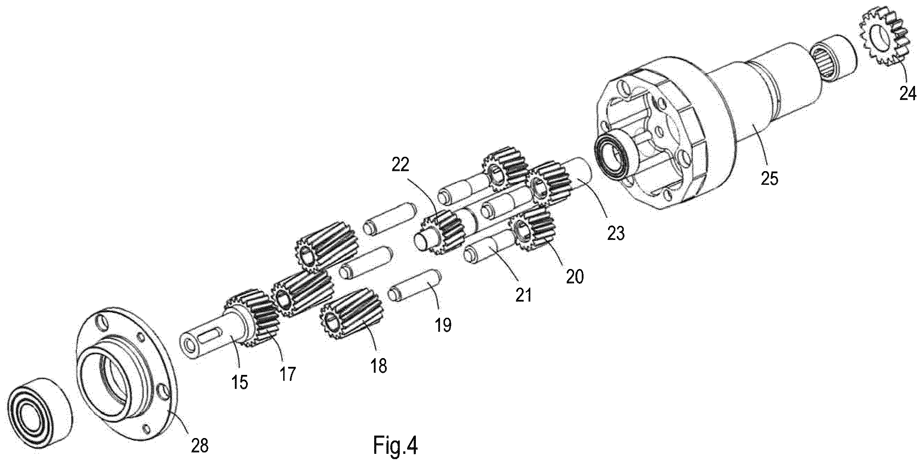

The control shaft 15 is provided with an external control gear 17. The control gear 17 meshes with three external intermediate gears 18, which are rotatably mounted on respective intermediate gear shafts 19, see Figs. 2 and 4. The intermediate gears 18 also mesh with respective external reverse gears 20. The reverse gears 20 are rotatably mounted on respective reverse gear shafts 21. The reverse gears 20 mesh with a transfer gear 22, which is fixed to a drive shaft 23. The drive shaft 23 extends concentrically through the central main portion 5 and also extends through the crank arm 7. At a side of the crank arm 7 where the crankpin 6 is located an external drive shaft gear 24 is fixed to the drive shaft 23, see Fig. 2. The drive shaft gear 24 meshes with the crank member gear 14 that is located closest to the front side of the engine 1.

The drive shaft 23 is rotatable with respect to the crankshaft 3 about the crankshaft axis 4 in this case. In an alternative embodiment it may rotate about a drive shaft axis that extends parallel to the crankshaft axis 4, i.e. which extends off centre.

The drive shaft 23 is rotatably mounted in a shaft housing 25 which is fixed inside a through-hole 26 of the crankshaft that extends through the central main portion 5 and the crank arm 7. In this case the shaft housing 25 is fixed inside the crankshaft 3 by means of screwing, but alternative fixing means are conceivable.

Fig. 2 shows that the through-hole 26 has a larger diameter than the drive shaft gear 24. This provides the opportunity to fix the drive shaft gear 24 to the drive shaft 23 before fixing the shaft housing 25 including the drive shaft 23 and the drive shaft gear 24 to the crankshaft 3 by moving the shaft housing 25 including the drive shaft 23 and the drive shaft gear 24 through the through-hole 26.

Fig. 2 shows that a protruding portion of the shaft housing 25 protrudes from the crankshaft 3 at the central main portion 5 at a side of the crank arm 7 opposite to the side where the crankpin 6 is located. Furthermore, Fig. 2 shows that two sprockets 27 are fixed to the protruding portion of the shaft housing 25. The sprockets 27 may be applied for driving camshafts, for example. The protruding portion of the shaft housing 25 is also provided with a widened portion which accommodates the control gear 17, the intermediate gears 18 including the intermediate gear shafts 19, the reverse gears 20 including the reverse gear shafts 21 and the transfer gear 22. One side of each of the intermediate gear shafts 19 and the reverse gear shafts 21 are fixed to the shaft housing 25, whereas opposite sides thereof are fixed to a cover 28 which is fixed to the shaft housing 25, together with a pulley 29 for driving auxiliary devices of the engine 1. The cover 28 has a central through-hole through which the control shaft 15 passes. A roller bearing 30 is provided at the through-hole of the cover 28 for supporting the control shaft 15. Upon assembly, it is possible to mount the shaft housing 25 including the gears, the shafts and the cover 28 as a single unit to the crankshaft 3 after which the pulleys 16, 29 are mounted to the crankshaft 3 and the control shaft 15 separately.

The pulley 29 is fixed to the widened portion and the control shaft 15 projects from the widened portion through a through-hole in the centre of the pulley 29. The pulley 29 has a cavity at the side of the shaft housing 25, in which the widened portion is partially accommodated. Due to the location of the widened portion with respect to the pulley 29 a lubrication circuit for lubricating the gears in the widened portion of the shaft housing 25 from the crankshaft 3 can be designed in a relatively simple manner.

The control shaft 15 and the drive shaft 23 support each other through a needle bearing 31. The drive shaft 23 is supported by the shaft housing 25 through a needle bearing 32 at the crank arm 7 and a roller bearing 33 nearby the transfer gear 22.

As described hereinbefore, the parts that are fixed to the shaft housing 25 can be pre-assembled and mounted as a single unit to the crankshaft 3. In order to facilitate an assembling operation a spring 34 is mounted between the roller bearing 33 and the drive shaft 23. The spring 34 allows a small displacement of the drive shaft 23 with respect to the shaft housing 25 in longitudinal direction of the drive shaft 23, which helps the drive shaft gear 24 to engage the crank member gear 14 in case their teeth face each other upon assembly. Particularly, in case of automatic assembly this helps to turn the drive shaft gear 24 with respect to the crank member gear 14 by a tiny angle such that they mesh with each other.

Fig. 4 shows that the circumference of the widened portion of the shaft housing 25 is provided with flat surface portions for easily screwing the shaft housing 25 into the through-hole 26 by means of workshop tools. As shown in Fig. 2 the widened portion clamps the sprockets 37 against the crankshaft 3 upon screwing the shaft housing 25 into the through-hole 26.

Preferably the dimensions of the gears 14, 17, 18, 20, 22 and 24 are selected such that when the control shaft 15 has a fixed position with respect to the crankcase 2 under operating conditions, the crank member 8 rotates at a rotation frequency with respect to the crankcase 2 which is half of that of the crankshaft 3 and in the same rotational direction as the crankshaft 3 as seen from the crankcase 2, i.e. when the engine runs at fixed compression ratio. In other words, under the conditions as mentioned above, the crank member 8 rotates about the crankpin 6 in opposite rotational direction of the crankshaft 3 and at a rotation frequency which is half of that of the crankshaft 3.

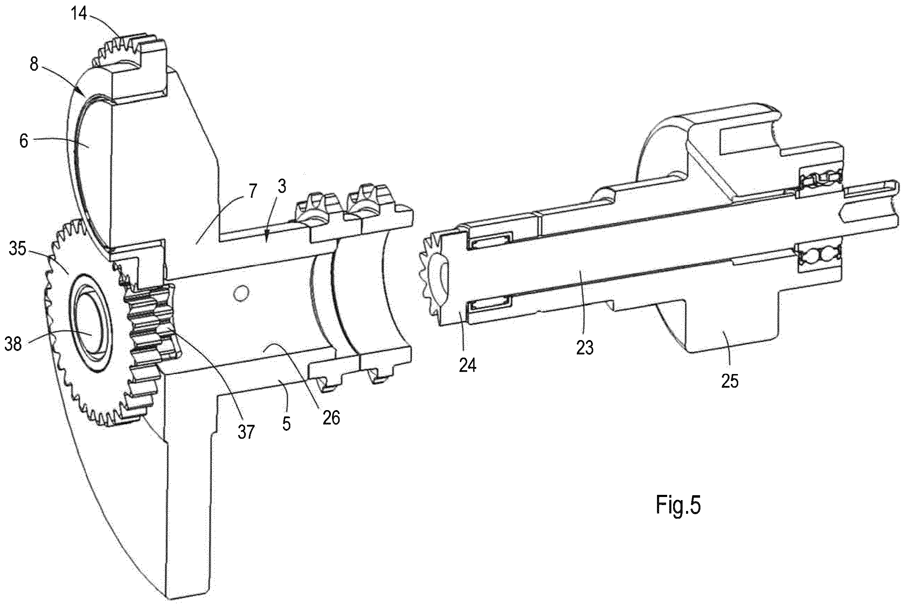

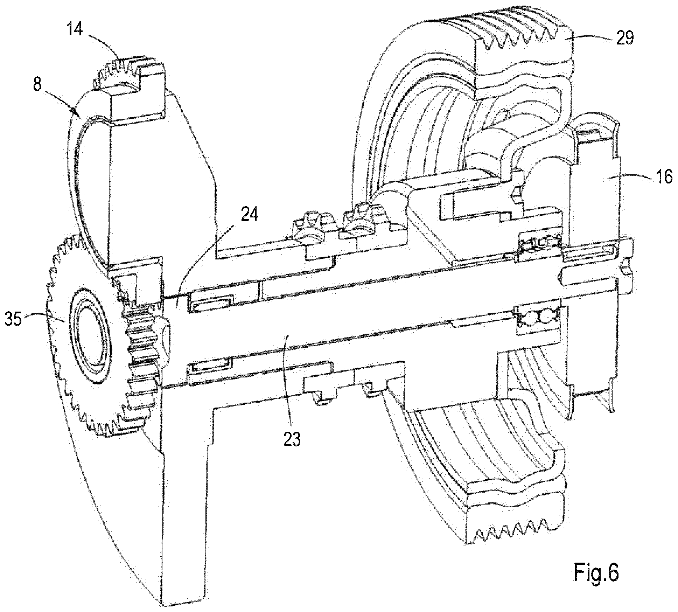

Figs. 5-8 show a part of an internal combustion engine which is provided with an alternative reciprocating piston mechanism. Parts that are similar to the embodiment as described hereinbefore are referred to by the same reference sign. The crank member 8 is driveably coupled to the drive shaft 23 via the drive shaft gear 24 which is fixed to the drive shaft 23. In this embodiment it is the drive shaft 23 which has a fixed rotational position with respect to the crankcase 2 when the engine runs at fixed compression ratio. The pulley 16 is fixed to the drive shaft 23 for varying the rotational position of the crank member 8 at virtual standstill of the crankshaft 3 under operating conditions, see Fig. 6.

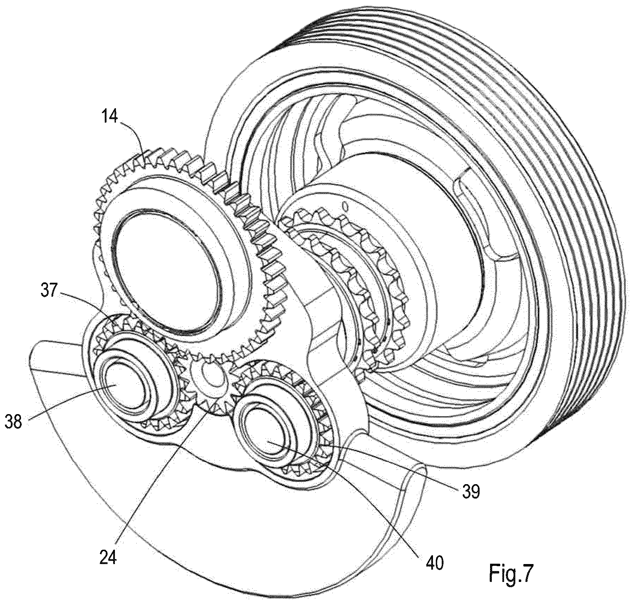

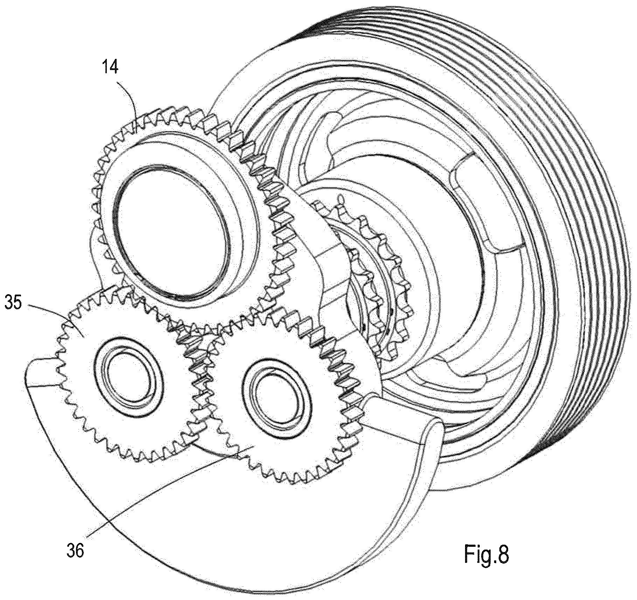

The crank member gear 14 meshes with a first rear intermediate gear 35 and a second rear intermediate gear 36, as shown in Fig. 8. The first rear intermediate gear 35 is fixed to a first front intermediate gear 37 and they are both rotatably mounted to a first intermediate shaft 38 that is fixed to the crankshaft 3. The second rear intermediate gear 36 is fixed to a second front intermediate gear 39 and they are both rotatably mounted to a second intermediate shaft 40 that is fixed to the crankshaft 3. The first and second front intermediate gears 37, 39 mesh with the drive shaft gear 24, as shown in Fig. 7 in which the first and second rear intermediate gears 35, 36 are left out for explanatory reasons.

Preferably the dimensions of the gears 14, 24, 35, 36, 37 and 39 are selected such that when the drive shaft 23 has a fixed position with respect to the crankcase 2 under operating conditions, the crank member 8 rotates at a rotation frequency with respect to the crankcase 2 which is half of that of the crankshaft 3 and in the same rotational direction as the crankshaft 3 as seen from the crankcase 2.

Fig. 5 illustrates that the drive shaft 23 including the drive shaft gear 24 and the shaft housing 25 can be pre-assembled before inserting the pre-assembled unit into the through-hole 26 and fixing it to the crankshaft 3.

From the foregoing, it will be clear that the invention provides a reciprocating piston mechanism which simplifies the process of assembling the mechanism.

The invention is not limited to the embodiments shown in the drawings and described hereinbefore, which may be varied in different manners within the scope of the claims.

## Claims

1. A reciprocating piston mechanism comprising
a crankcase (2);
a crankshaft (3) having a crankshaft axis (4), a crankpin (6), a crank arm (7) and a crankshaft portion (5) extending parallel to the crankpin, wherein the crank arm (7) is located between said crankshaft portion (5) and the crankpin (6) as seen along the crankshaft axis (4), wherein the crankshaft (3) is supported by the crankcase (2) and rotatable with respect thereto about the crankshaft axis (4);
a connecting rod (11) including a big end (10) and a small end (12);
a piston (13) being rotatably connected to the small end (12);
a crank member (8) being rotatably mounted on the crankpin (6), and comprising a bearing portion (9) having an outer circumferential wall which bears the big end (10) of the connecting rod (11) such that the connecting rod (11) is rotatably mounted on the bearing portion (9) of the crank member (8) via the big end (10);
wherein the crank member (8) is driveably coupled to a drive wheel (24) for driving the crank member in rotational direction with respect to the crankpin (6), which drive wheel (24) is disposed at the same side of the crank arm (7) as the crank member (8) and fixed to a drive shaft (23) that is rotatably mounted to the crankshaft (3) and that extends in the same direction as the crankshaft axis (4) through a through-hole (26) in the crank arm (7), **characterized in that** said through-hole (26) has a larger diameter than an external diameter of the drive wheel (24).

2. A reciprocating piston mechanism according to claim 1, wherein said crankshaft portion (5) has a centreline which coincides with the crankshaft axis (4) and wherein the through-hole (26) also extends through said crankshaft portion (5) and wherein the drive shaft (23) extends through said crankshaft portion (5) and the crank arm (7).

3. A reciprocating piston mechanism according to claim 2, wherein the drive shaft (23) is rotatable about a drive shaft axis which coincides with the crankshaft axis (4).

4. A reciprocating piston mechanism according to one of the preceding claims, wherein the drive shaft (23) is rotatably mounted in a shaft housing (25) which is fixed inside said through-hole (26).

5. A reciprocating piston mechanism according to claim 4, wherein the shaft housing (25) protrudes from the crankshaft (3) at said crankshaft portion (5) at a side of the crank arm (7) opposite to the side where the crankpin (6) is located.

6. A reciprocating piston mechanism according to claim 5, wherein a driving element, such as a pulley (29), a sprocket wheel (27) or the like is fixed on the protruding portion of the shaft housing (25).

7. A reciprocating piston mechanism according to one of the claims 4-6, wherein the shaft housing (25) is screwed inside the through-hole (26).

8. A reciprocating piston mechanism according to one of the claims 4-7, wherein the drive shaft (23) protrudes from the shaft housing (25) at a side of the crank arm (7) opposite to the side where the crankpin (6) is located.

9. A reciprocating piston mechanism according to one of the preceding claims, wherein the crank member (8) is provided with an external crank member gear (14) and the drive wheel is formed by an external drive gear (24) which meshes with the crank member gear (14).

10. A reciprocating piston mechanism according to one of the claims 1-8, wherein the crank member (8) is provided with an external crank member gear (14) and the drive wheel is formed by an external drive gear (24), which mesh with an intermediate gear that is rotatably mounted to the crankshaft (3).

11. A reciprocating piston mechanism according to claims 3, 6 and 9, wherein the drive shaft (23) is provided with a transfer gear (22) which meshes with a reverse gear (20) that is rotatably mounted to the shaft housing (25), which reverse gear (20) meshes with a rear intermediate gear (18) that is fixed to a front intermediate gear (18) and rotatably mounted to the shaft housing (25), wherein the front intermediate gear (18) meshes with a control gear (17) that is fixed on a control shaft (15), wherein the reverse gear (20) meshes with the transfer gear (22) and the rear intermediate gear (18) in a rear plane and the control gear (17) and the front intermediate gear (18) mesh with each other in a front plane which extends parallel to the rear plane, wherein the control shaft (15) is rotatable with respect to the shaft housing (25) about the crankshaft axis (4), wherein the control gear (17), the front and rear intermediate gears (18), the reverse gear (20) and the transfer gear (22) are accommodated in a widened portion of the protruding portion of the shaft housing (25), wherein a pulley (29) is fixed to the widened portion and the control shaft (15) projects from the widened portion through a through-hole in the centre of the pulley (29).

12. A reciprocating piston mechanism according to claim 11, wherein the pulley (29) has a cavity at the side of the shaft housing (25), in which the widened portion is at least partially accommodated.

13. A reciprocating piston mechanism according to claim 11 or 12, wherein the front and rear intermediate gears form a common intermediate gear (18).

## Patentansprüche

1. Hubkolbenmechanismus, aufweisend:
ein Kurbelgehäuse (2);
eine Kurbelwelle (3) mit einer Kurbelwellenachse (4), einem Kurbelzapfen (6), einem Kurbelarm (7) und einem parallel zum Kurbelzapfen verlaufenden Kurbelwellenabschnitt (5), wobei sich der Kurbelarm (7), entlang der Kurbelwellenachse (4) betrachtet, zwischen dem Kurbelwellenabschnitt (5) und dem Kurbelzapfen (6) befindet, wobei die Kurbelwelle (3) von dem Kurbelgehäuse (2) gelagert wird und in Bezug auf dieses um die Kurbelwellenachse (4) drehbar ist;
ein Pleuel (11), das ein großes Ende (10) und ein kleines Ende (12) aufweist;
einen Kolben (13), der drehbar mit dem kleinen Ende (12) verbunden ist;
ein Kurbelelement (8), das drehbar an dem Kurbelzapfen (6) gelagert ist und einen Lagerabschnitt (9) mit einer Außenumfangswand aufweist, die das große Ende (10) des Pleuels (11) derart lagert, dass das Pleuel (11) über das große Ende (10) drehbar an dem Lagerabschnitt (9) des Kurbelelements (8) gelagert ist;
wobei das Kurbelelement (8) antriebswirksam mit einem Antriebsrad (24) gekoppelt ist, um das Kurbelelement in Bezug auf den Kurbelzapfen (6) in Drehrichtung anzutreiben, wobei das Antriebsrad (24) an derselben Seite des Kurbelarms (7) wie das Kurbelelement (8) angeordnet und an einer Antriebswelle (23) befestigt ist, die drehbar an der Kurbelwelle (3) gelagert ist und sich durch eine Durchgangsöffnung (26) in dem Kurbelarm (7) in dieselbe Richtung erstreckt wie die Kurbelwellenachse (4),
**dadurch gekennzeichnet, dass** die Durchgangsöffnung (26) einen Durchmesser besitzt, der größer ist als ein Außendurchmesser des Antriebsrads (24).

2. Hubkolbenmechanismus nach Anspruch 1, wobei der Kurbelwellenabschnitt (5) eine Mittellinie hat, die mit der Kurbelwellenachse (4) zusammenfällt, und wobei sich die Durchgangsöffnung (26) ferner durch den Kurbelwellenabschnitt (5) erstreckt, und wobei sich die Antriebswelle (23) durch den Kurbelwellenabschnitt (5) und den Kurbelarm (7) erstreckt.

3. Hubkolbenmechanismus nach Anspruch 2, wobei die Antriebswelle (23) um eine Antriebswellenachse drehbar ist, die mit der Kurbelwellenachse (4) zusammenfällt.

4. Hubkolbenmechanismus nach einem der vorstehenden Ansprüche, wobei die Antriebswelle (23) drehbar in einem Wellengehäuse (25) gelagert ist, das im Inneren der Durchgangsöffnung (26) befestigt ist.

5. Hubkolbenmechanismus nach Anspruch 4, wobei das Kurbelwellengehäuse (25) an dem Kurbelwellenabschnitt (5) auf einer Seite des Kurbelarms (7) gegenüberliegend der Seite, auf der sich der Kurbelzapfen (6) befindet, von der Kurbelwelle (3) vorsteht.

6. Hubkolbenmechanismus nach Anspruch 5, wobei ein Antriebselement, etwa eine Riemenscheibe (29), ein Zahnrad (27) oder dergleichen an dem vorstehenden Abschnitt des Wellengehäuses (25) befestigt ist.

7. Hubkolbenmechanismus nach einem der Ansprüche 4 bis 6, wobei das Wellengehäuse (25) in der Durchgangsöffnung (26) verschraubt ist.

8. Hubkolbenmechanismus nach einem der Ansprüche 4 bis 7, wobei die Antriebswelle (23) auf einer Seite des Kurbelarms (7) gegenüberliegend der Seite, auf der sich der Kurbelzapfen (6) befindet, von dem Wellengehäuse (25) vorsteht.

9. Hubkolbenmechanismus nach einem der vorstehenden Ansprüche, wobei das Kurbelelement (8) mit einem externen Kurbelelementrad (14) versehen ist und das Antriebsrad durch ein externes Antriebsrad (24) gebildet wird, das mit dem Kurbelelementrad (14) ineinander greift.

10. Hubkolbenmechanismus nach einem der Ansprüche 1 bis 8, wobei das Kurbelelement (8) mit einem externen Kurbelelementrad (14) versehen ist und das Antriebsrad durch ein externes Antriebsrad (24) gebildet wird, die mit einem Zwischenrad ineinander greifen, das drehbar an der Kurbelwelle (3) gelagert ist.

11. Hubkolbenmechanismus nach Anspruch 3, 6 und 9, wobei die Antriebswelle (23) mit einem Übertragungsrad (22) versehen ist, das mit einem Rücklaufrad (20) ineinander greift, das drehbar an dem Wellengehäuse (25) gelagert ist, wobei das Rücklaufrad (20) mit einem hinteren Zwischenrad (18) ineinander greift, das an einem vorderen Zwischenrad (18) befestigt ist und drehbar an dem Wellengehäuse (25) gelagert ist, wobei das vordere Zwischenrad (18) mit einem Steuerrad (17) ineinander greift, das an einer Steuerwelle (15) befestigt ist, wobei das Rücklaufrad (20) mit dem Übertragungsrad (22) und dem hinteren Zwischenrad (18) in einer hinteren Ebene ineinander greift und das Steuerrad (17) und das vordere Zwischenrad (18) in einer vorderen Ebene, die sich parallel zur hinteren Ebene erstreckt, ineinander greifen, wobei die Steuerwelle (15) in Bezug auf das Wellengehäuse (25) um die Kurbelwellenachse (4) drehbar ist, wobei das Steuerrad (17), das vordere und das hintere Zwischenrad (18), das Rücklaufrad (20) und das Übertragungsrad(22) in einem geweiteten Abschnitt des vorstehenden Abschnitts des Wellengehäuses (25) aufgenommen sind, wobei eine Riemenscheibe (29) an dem geweiteten Abschnitt befestigt ist und die Steuerwelle (15) durch eine Durchgangsöffnung in der Mitte der Riemenscheibe (29) von dem geweiteten Abschnitt vorsteht.

12. Hubkolbenmechanismus nach Anspruch 11, wobei die Riemenscheibe (29) an der Seite des Wellengehäuses (25) eine Kavität aufweist, in der der geweitete Abschnitt zumindest teilweise aufgenommen ist.

13. Hubkolbenmechanismus nach Anspruch 11 oder 12, wobei das vordere und das hintere Zwischenrad ein gemeinsames Zwischenrad (18) bilden.

## Revendications

1. Mécanisme de piston alternatif comprenant
un carter (2) ;
un vilebrequin (3) ayant un axe de vilebrequin (4), un maneton (6), un bras de manivelle (7) et une partie de vilebrequin (5) s'étendant parallèlement au maneton, dans lequel le bras de manivelle (7) est située entre ladite partie de vilebrequin (5) et le maneton (6) comme on le voit le long de l'axe de vilebrequin (4), dans lequel le vilebrequin (3) est supporté par le carter (2) et pouvant tourner par rapport à celui-ci autour de l'axe de vilebrequin (4) ;
une bielle (11) comportant une grosse extrémité (10) et une petite extrémité (12) ;
un piston (13) relié de manière rotative à la petite extrémité (12) ;
un organe de manivelle (8) monté de manière rotative sur le maneton (6), et comprenant une partie palier (9) ayant une paroi circonférentielle extérieure qui supporte la grosse extrémité (10) de la bielle (11) de telle sorte que la bielle (11) est montée de manière rotative sur la partie palier (9) de l'organe de manivelle (8) via la grosse extrémité (10) ;
dans lequel l'organe de manivelle (8) est accouplé par entraînement à une roue d'entraînement (24) pour entraîner l'organe de manivelle dans une direction de rotation par rapport au maneton (6), laquelle roue d'entraînement (24) est disposée du même côté du bras de manivelle (7) que l'organe de manivelle (8) et fixée à un arbre d'entraînement (23) qui est monté de manière rotative sur le vilebrequin (3) et qui s'étend dans la même direction que l'axe de vilebrequin (4) à travers un trou traversant (26) dans le bras e vilebrequin (7),
**caractérisé en ce que** ledit trou traversant (26) présente un diamètre plus grand qu'un diamètre externe de la roue d'entraînement (24).

2. Mécanisme de piston alternatif selon la revendication 1, dans lequel ladite partie de vilebrequin (5) présente une ligne médiane qui coïncide avec l'axe de vilebrequin (4) et dans lequel le trou traversant (26) s'étend également à travers ladite partie de vilebrequin (5) et dans lequel l'arbre d'entraînement (23) s'étend à travers ladite partie de vilebrequin (5) et le bras de manivelle (7).

3. Mécanisme de piston alternatif selon la revendication 2, dans lequel l'arbre d'entraînement (23) peut tourner autour d'un axe d'arbre d'entraînement qui coïncide avec l'axe de vilebrequin (4).

4. Mécanisme de piston alternatif selon l'une des revendications précédentes, dans lequel l'arbre d'entraînement (23) est monté de manière rotative dans un logement d'arbre (25) qui est fixé à l'intérieur dudit trou traversant (26).

5. Mécanisme de piston alternatif selon la revendication 4, dans lequel le logement d'arbre (25) fait saillie depuis le vilebrequin (3) au niveau de ladite partie de vilebrequin (5) au niveau d'un côté du bras de manivelle (7) opposé au côté où se situe le maneton (6).

6. Mécanisme de piston alternatif selon la revendication 5, dans lequel un élément d'entraînement, tel qu'une poulie (29), une roue dentée (27) ou autre, est fixé sur la partie saillante du logement d'arbre (25).

7. Mécanisme de piston alternatif selon l'une des revendications 4 à 6, dans lequel le logement d'arbre (25) est vissé à l'intérieur du trou traversant (26).

8. Mécanisme de piston alternatif selon l'une des revendications 4 à 7, dans lequel l'arbre d'entraînement (23) fait saillie depuis le logement d'arbre (25) au niveau d'un côté du bras de manivelle (7) opposé au côté où se situe le maneton (6).

9. Mécanisme de piston alternatif selon l'une des revendications précédentes, dans lequel l'organe de manivelle (8) est pourvu d'un engrenage d'organe de manivelle externe (14) et la roue d'entraînement est formée par un engrenage d'entraînement externe (24) qui s'emboîte avec l'engrenage d'organe de manivelle (14).

10. Mécanisme de piston alternatif selon l'une des revendications 1 à 8, dans lequel l'organe de manivelle (8) est pourvu d'un engrenage d'organe de manivelle externe (14) et la roue d'entraînement est formée par un engrenage d'entraînement externe (24), qui s'emboîtent avec un engrenage intermédiaire qui est monté de manière rotative sur le vilebrequin (3).

11. Mécanisme de piston alternatif selon les revendications 3, 6 et 9, dans lequel l'arbre d'entraînement (23) est pourvu d'un engrenage de transfert (22) qui s'emboîte avec un engrenage inverse (20) qui est monté de manière rotative sur le logement d'arbre (25), lequel engrenage inverse (20) s'emboîte avec un engrenage intermédiaire arrière (18) qui est fixé à un engrenage intermédiaire avant (18) et monté de manière rotative sur le logement d'arbre (25), dans lequel l'engrenage intermédiaire avant (18) s'emboîte avec un engrenage de commande (17) qui est fixé sur un arbre de commande (15), dans lequel l'engrenage inverse (20) s'emboîte avec l'engrenage de transfert (22) et l'engrenage intermédiaire arrière (18) dans un plan arrière et l'engrenage de commande (17) et l'engrenage intermédiaire avant (18) s'emboîtent l'un avec l'autre dans un plan avant qui s'étend parallèlement au plan arrière, dans lequel l'arbre de commande (15) peut tourner par rapport au logement d'arbre (25) autour de l'axe de vilebrequin (4), dans lequel l'engrenage de commande (17), les engrenages intermédiaires avant et arrière (18), l'engrenage inverse (20) et l'engrenage de transfert (22) sont accueillis dans une partie élargie de la partie saillante du logement d'arbre (25), dans lequel une poulie (29) est fixée à la partie élargie et l'arbre de commande (15) se projette depuis la partie élargie à travers un trou traversant dans le centre de la poulie (29).

12. Mécanisme de piston alternatif selon la revendication 11, dans lequel la poulie (29) comporte une cavité au niveau du côté du logement d'arbre (25), dans laquelle la partie élargie est au moins partiellement accueillie.

13. Mécanisme de piston alternatif selon la revendication 11 ou 12, dans lequel les engrenages intermédiaires avant et arrière forment un engrenage intermédiaire commun (18).
